# EUROPÄISCHE PATENTSCHRIFT

(11) **EP 2 440 859 B1**
(45) Veröffentlichungstag und Bekanntmachung des Hinweises auf die Patenterteilung: **01.02.2017**
(21) Anmeldenummer: 10724505.2
(22) Anmeldetag: 09.06.2010
(51) Int. Cl.: F24J 2/46

(54) **REINIGUNGSSYSTEM FÜR KOLLEKTOREN IN KOMBINATION MIT EINER SPEZIELLEN SCHUTZSTELLUNG**
CLEANING SYSTEM FOR COLLECTORS COMBINED WITH A SPECIFIC PROTECTIVE POSITION
SYSTÈME DE NETTOYAGE POUR CAPTEURS EN COMBINAISON AVEC UNE POSITION DE PROTECTION SPÉCIALE

(30) Priorität: 10.06.2009 AT 8962009
(43) Veröffentlichungstag der Anmeldung: 18.04.2012
(73) Patentinhaber: Hadlauer, Martin, 8700 Leoben (AT)
(72) Erfinder: Hadlauer, Martin, 8700 Leoben (AT)
(74) Vertreter: Dilg, Haeusler, Schindelmann Patentanwaltsgesellschaft mbH
(86) Internationale Anmeldenummer: PCT/EP2010/058114
(87) Internationale Veröffentlichungsnummer: WO 2010/142745

(56) Entgegenhaltungen:
- WO-A1-2005/003644
- DE-A1- 19 952 276
- DE-U1-202008 009 010
- US-A- 4 202 322
- US-A- 5 404 868
- US-A1- 2008 163 864

## Beschreibung

### Gebiet der Erfindung

Die Anmeldung betrifft ein Reinigungssystem für Kollektoren, insbesondere in Kombination mit einer speziellen Schutzstellung. Ferner betrifft die Anmeldung ein Haltesystem für ein Solarkollektorsystem, insbesondere einen Bewegungsapparat mit Halte- und Nachführfunktionen.

### Hintergrund der Erfindung

Die Dokumente DE 199 52 276 A1 und US 2008/0163864 A1 offenbaren Kollektorsysteme, die jeweils mindestens einen Parabolrinnenkollektor mit einem Reinigungssystem mit Putzdüsen aufweisen.

In der Offenlegung, PCT/AT2004/000233 wird ein neuartiges Kollektorsystem mit spiegelkonzentrierenden Kollektoren vorgestellt, welche zweiachsig nachgeführt werden. Zusätzlich zur zweiachsigen Nachführung wird die Möglichkeit gezeigt die Kollektoren paarweise an den Spiegelenden zu verschließen. Dadurch ist zum einen ein wirkungsvoller Schutz gegen schädigende Umwelteinflüsse zu erreichen, zum anderen wird die Windangriffsfläche im Schutzzustand halbiert. Die Schutzstellung ist besonders wichtig um Schädigungen bei extremen Umwelteinflüssen (Sandsturm, Hagel ...) zu vermeiden, und um die Verschmutzungsgeschwindigkeit zu vermindern. Ein regelmäßiges Reinigen der Spiegel ist aber trotzallem unabdingbar. Das übliche Putzen durch Abspritzen mit Wasser ist sehr arbeitsintensiv und benötigt viel Wasser.

Ein Ziel der vorliegenden Erfindung ist, die kompakte Schutzstellung mit jeweils paarweise an den Spiegelenden verschlossenen Kollektoren in den automatischen Putzvorgang der Kollektoren einzubinden und somit eine effiziente Reinigung mit geringem Wasserverbrauch zu erzielen. Oberflächenschädigungen, verursacht durch mitgetragene Sandpartikel im Wasserstrahl, mögen durch eine schonende Reinigung weitgehend verhindert werden.

Ferner mag sich ein Bedarf für ein Haltesystem für ein Solarkollektorsystem ergeben, welches Solarkollektoren wirksam und effektiv schützen, abstützen und/oder tragen mag. Insbesondere mag die Abstützung in einer Ruhestellung der Solarkollektoren ermöglicht sein.

### Kurzzusammenfassung der Erfindung

Dies mag erfindungsgemäß dadurch erreicht werden, indem ein Solarkollektorsystem geschaffen wird, welches eine Mehrzahl von spiegelkonzentrierenden Kollektoren und ein Reinigungssystem mit Putzdüsen aufweist, welches an den Kollektoren angebracht ist, wobei die Putzdüsen derart eingerichtet sind, dass mittels ihnen ein Reinigungsmedium oder Fluid zu den Kollektoren leitbar ist, und wobei das Solarkollektorsystem derart eingerichtet ist, dass die Kollektoren während eines Putzvorgangs eine geschlossene Schutzstellung einnehmen, die durch paarweises Zusammenschließen der Kollektoren an Spiegelenden der Kollektoren erfolgt und bei welcher ein Innenraum zwischen den Kollektoren abgedichtet ist, ist, wobei mittels der Putzdüsen in der Schutzstellung ein Reinigungsmedium oder Fluid in den Innenraum der paarweise verschlossenen Kollektoren eingebracht werden kann.
Das Reinigungsmedium mag Heißdampf bzw. ein Dampf/Wasser-Gemisch sein.

Mit dem Dampf mögen die Kollektoren zudem gleichmäßig aufgeheizt werden. Dies mag Wärmespannungen an den empfindlichen Glasspiegeln verhindern. Anschließend mag ein Spülvorgang kommen. Damit das Wasser mit den Schmutzpartikeln abrinnen kann, mögen die Kollektoren beim Abspülen geöffnet werden oder es mögen spezielle Öffnungen vorgesehen werden, über welche dass Wasser bzw. Putzmedium abrinnen kann. Vorstellbar ist, das Schmutzwasser über spezielle Auffangvorrichtungen zu sammeln. Nachfolgend kann es dann optional einer Wiederverwertung zugeführt werden oder zur Bewässerung von landwirtschaftlich genutzten Flächen verwenden werden.

Die Kollektoren oder Solarkollektoren mögen über einen Haltebügel in der Lage fixiert und zusätzlich aneinander gepresst werden, sodass eine gute Abdichtung erfolgt. Grundsätzlich können all die Techniken, die bei einer Geschirrspülmaschine zur Anwendung kommen, auch bei diesem System eingesetzt werden. So kann es einen Vor- und Hauptwaschgang sowie einen abschließenden Spülgang geben. Die Heißdampf- und/oder Wassereinleitung mag über eine Mehrzahl von Putzdüsen erfolgen.

Idealerweise sind die Düsen beweglich angeordnet. Die Düsenanordnung und der Bewegungsverlauf mögen auf eine optimale Putzwirkung auszulegen sein bzw. sind auf eine optimale Putzwirkung auszulegen, wobei unterschiedlichste Ausführungsvarianten denkbar sind. Vorzugsweise werden im Kollektorbetrieb die Putzdüsen eingefahren, damit der Strahlengang des Sonnenlichtes nicht gestört wird.

Gemäß der Erfindung ist ein Solarkollektorsystem geschaffen, welches zumindest einen Kollektor und ein Reinigungssystem aufweist, welches an dem Kollektor angebracht oder befestigt ist und welches derart eingerichtet ist, dass mittels ihm ein Reinigungsmedium oder -fluid zu dem Kollektor leitbar oder zuführbahr ist. Das Reinigungsfluid mag Wasser, Dampf oder ein Wasser/Dampf-Gemisch sein und mag zusätzlich Reinigungsmittel, z.B. Detergenzien oder Tenside, aufweisen. Das Solarkollektorsystem weist eine gerade Anzahl von Solarkollektoren auf und ist derart eingerichtet, dass die Solarkollektoren von einem offenen Zustand in einen geschlossenen Zustand oder eine Schutzstellung bringbar sind. In der Schutzstellung sind jeweils zwei Solarkollektoren gegeneinander derart gelagert, dass Innenbereiche der Solarkollektoren von Umwelteinflüssen geschützt sind.

Gemäß einem Ausführungsbeispiel des ersten Aspekts mögen die Putzdüsen beweglich gelagert sein.

Gemäß einem Ausführungsbeispiel der Erfindung mögen die Putzdüsen auf einem Verteilerring angeordnet sein, der über Führungen ausgefahren werden kann. Insbesondere mag der zumindest eine Solarkollektor einen Verteilerring aufweisen, auf welchen die Putzdüsen angeordnet sind. Der Verteilerring mag optional derart eingerichtet sein, dass er über Führungen verfahrbar ist.

Gemäß einem Ausführungsbeispiel der Erfindung mögen an den Spiegelenden Gummidichtungen angebracht sein. Insbesondere mag das Solarkollektorsystem Gummidichtungen aufweisen, welche an den Spiegelenden der Solarkollektoren angeordnet sind.

Gemäß einem Ausführungsbeispiel der Erfindung mögen die Kollektoren in der Schutzstellung über eine Haltevorrichtung stabil positioniert werden und aneinander gepresst werden. Insbesondere mag das Solarkollektorsystem eine Haltevorrichtung aufweisen, welche derart eingerichtet ist, dass die Solarkollektoren in der Schutzstellung mittels der Haltevorrichtung stabil positioniert werden und aneinander gepresst werden.

Gemäß einem Teil eines zweiten beispielhaften Aspekts ist ein Haltesystem für ein Solarkollektorsystem geschaffen, wobei das Haltesystem zwei Schwenkarme, welche eine Arbeitsstellung und eine Ruhestellung einnehmen können und die dazu eingerichtet sind, dass Solarkollektoren daran koppelbar sind, ferner eine Haltevorrichtung, welche an eine Basis bzw. ein Fundament eines Solarkollektorsystems koppelbar ist, und mindestens ein Aufnahmeelement aufweist, welches an zumindest einen der Schwenkarme koppelbar ist, wobei die Haltevorrichtung und das Aufnahmeelement derart koppelbar sind, dass diese in der Ruhestellung Kräfte der Schwenkarme und der Solarkollektoren aufnehmen.

Insbesondere mag die Haltevorrichtung optional direkt derart an eine Basis des Solarkollektorsystems gekoppelt sein oder koppelbar sein, dass mittels ihr eine Entlastung eines Basisgestänges ermöglicht wird, an welcher die Schwenkarme befestigt sind. Beispielsweise mag die Haltevorrichtung optional die Kräfte direkt oder nur über eine Basis oder Bodenplatte in ein Fundament oder den Boden einleiten. Anders ausgedrückt mag sich eine oben genannten Haltevorrichtung von einer bloßen Strebe unterscheiden, welche zwar mit einem Ende an einem Punkt einer Schwenkvorrichtung ankoppelbar ist, jedoch an ihrem anderen Ende mit einem Ständer oder Steher eines Solarkollektorsystems gekoppelt ist, zu dem das Haltesystem gehört. Eine solche Strebe stellt somit keinen zusätzlichen Punkt bereit, an welchen Kraft oder Momente in das Fundament oder eine Bodenplatte eingeleitet wird. Im Gegenzug mag mit einer oben genannten Haltevorrichtung eine Mehrpunktabstützung der Schwenkarme am Fundament, Basis oder einer Basisplatte ermöglicht werden.

Insbesondere mögen unter dem Begriff Kräfte auch Momente fallen. Beispiele für solche Kräfte mögen insbesondere Drehmomente, Gewichtskräfte sowie statische oder dynamische Kräfte sein. Beispielsweise mögen die Schwenkarme dreh- und/oder schwenkbar eingerichtet sein. Insbesondere mag die Ruhestellung der Schwenkarme oder Solarkollektoren einer Stellung entsprechen, in welcher die Solarkollektoren miteinander in Kontakt kommen. Beispielsweise mögen die Solarkollektoren in der Ruhestellung eine geschlossene Anordnung oder Ausrichtung aufweisen, in welcher energieaufnehmende oder aktive Flächen, z.B. die lichtempfindliche Seite von Solarzellen, sich aufeinander ausrichten und optional sich die Solarkollektoren an einem Rahmen der Solarzellen berühren, so dass eine geschlossene Anordnung entstehen mag, welche einen Schutz für die energieaufnehmenden Flächen bereitstellen mag.

Gemäß einem Teil des zweiten beispielhaften Aspekts ist ein Haltesystem für ein Solarkollektorsystem geschaffen, wobei das Nachführsystem ein Haltesystem gemäß einem beispielhaften Aspekt und eine Schwenkeinrichtung aufweist, wobei die Schwenkarme an der Schwenkeinrichtung befestigt sind und wobei die Schwenkeinrichtung eingerichtet ist, die Schwenkarme zwischen der Arbeitsstellung und der Ruhestellung zu schwenken. Insbesondere mag die Schwenkeinrichtung oder Dreheinrichtung optional eine Getriebeeinheit aufweisen oder Teil einer Getriebeeinheit sein.

Gemäß einem Teil des zweiten beispielhaften Aspekts ist ein Solarkollektorsystem geschaffen, welches ein Nachführsystem gemäß einem beispielhaften Aspekt, eine Mehrzahl von Solarkollektoren, wobei jeder der Solarkollektoren an einem der beiden Schwenkarme befestigt ist, und weiters ein Basisgestänge aufweist, welches an ein Fundament befestigbar ist und an welches das Nachführsystem gekoppelt bzw. befestigt ist. Insbesondere mag das Solarkollektorsystem optional eine fix am Fundament befestigte Aufhängung aufweisen, an welche eine Getriebeeinheit an Flanschen mit gezielt positionierten Schraubenverbindungen in der passenden Neigung zur Horizontalen montiert werden kann.

Insbesondere mag unter dem Begriff Solarkollektor beispielsweise die Gesamtheit einer Anordnung von Elementen verstanden werden, welche benötigt werden, um Strahlungsenergie der Sonne oder Licht in eine andere Energieform umzuwandeln, beispielsweise Wärme oder elektrischen Strom. Somit mag insbesondere bei einem thermischen Solarkollektor, d.h. einen Solarkollektor, welcher Strahlungsenergie der Sonne in Wärme umwandelt, der Absorber Teil des Solarkollektors sein, da ja gerade dieser die Energieumwandlung vornimmt. Eventuell vorhandene Spiegel oder strahlumleitende oder strahlbündelnde Elemente mögen zwar ebenfalls Teil des Solarkollektors sein, können jedoch nicht alleinig ohne einen Absorber als Solarkollektor verstanden werden. Insbesondere mag es mit dem Haltesystem möglich sein, zwei Solarkollektoren relativ zueinander zu bewegen, wobei einer der Solarkollektoren an dem einen Schwenkarm und der andere Solarkollektor an dem anderen Schwenkarm befestigt ist.

Mit dem Bereitstellen eines Haltesystems und den passenden Aufnahmeelementen an den Schwenkarmen mag es ermöglicht werden, die Schwenkarme in einer Ruhestellung abzustützen, bzw. Kräfte von diesen abzuleiten. Somit mag es möglich sein, eine effektive und wirksame Entlastung der Schwenkarme und eines ggf. angekoppelten Getriebeapparates zu erreichen. Hierbei mag die Ruhestellung beispielsweise insbesondere bei starken Winden eingesetzt werden und dazu dienen einerseits die Solarkollektoren zu schützen und andererseits die bei solchen Winden höhere Belastung zuverlässig aufzunehmen.

Im Folgenden werden weitere Ausgestaltungen des Haltesystems des zweiten Aspekts beschrieben. Die Ausgestaltungen gelten jedoch auch für das Nachführsystem und für das Solarkollektorsystem.

Gemäß einem beispielhaften Ausführungsbeispiel des Haltesystems des zweiten Aspekts sind die beiden Schwenkarme derart eingerichtet, dass sie um eine gemeinsame Achse schwenkbar sind. Insbesondere mag die gemeinsame Achse durch eine gemeinsame Schwenkeinrichtung oder gemeinsame Dreheinheit realisiert sein. Beispielsweise mögen beide Schwenkarme an derselben Schwenkeinrichtung befestigt sein, welche eine Drehachse aufweist.

Gemäß einem beispielhaften Ausführungsbeispiel des Haltesystems des zweiten Aspekts ist die Haltevorrichtung beweglich. Insbesondere mag die Haltevorrichtung zwischen einer Ruhestellung und einer aktiven Stellung beweglich oder schwenkbar sein. Beispielsweise mag in der Ruhestellung der Haltevorrichtung kein Eingriff der Aufnahmeelemente mit den Schwenkarmen erfolgen, während in der aktiven Stellung der Haltevorrichtung ein Eingriff zu den Halterungen an den Schwenkarmen erfolgen mag. Die Ruhestellung der Haltevorrichtung mag somit einer Arbeitsstellung der Schwenkarme oder daran gekoppelter Solarkollektoren entsprechen, wohingegen die aktive Stellung der Haltevorrichtung der Ruhestellung der Schwenkarme oder daran gekoppelter Solarkollektoren entspricht. In diesem Zusammenhang mag "entsprechen" insbesondere eine zeitliche Gleichzeitigkeit bedeuten. Gemäß einem beispielhaften Ausführungsbeispiel des Haltesystems des zweiten Aspekts ist die Haltevorrichtung schwenkbar ausgeführt, wobei eine Schwenkachse der Haltevorrichtung mittels einer gelagerten Achse definiert ist. Insbesondere mag die Achse an eine Basis des Solarkollektorsystems gekoppelt oder gelagert sein. Beispielsweise mag die Basis durch ein Fundament und daran befestigten Lagerböcken ausgebildet sein.

Gemäß einem beispielhaften Ausführungsbeispiel des Haltesystems des zweiten Aspekts weist die Haltevorrichtung zumindest einen Einfahrkopf auf, welcher in der Ruhestellung der Schwenkarme in das Aufnahmeelement eines Schwenkarms eingreift. Insbesondere mag jeder der Schwenkarme ein eigenes Aufnahmeelement aufweisen und die Haltevorrichtung mag eine entsprechende Anzahl von Einfahrköpfen aufweisen, wobei bevorzugt je ein Einfahrkopf in ein Aufnahmeelement eingreift.

Im Folgenden werden weitere Ausgestaltungen des Nachführsystem des zweiten Aspekts beschrieben. Die Ausgestaltungen gelten jedoch auch für das Haltesystems und für das Solarkollektorsystem.

Gemäß einem beispielhaften Ausführungsbeispiel des Nachführsystems des zweiten Aspekts ist zumindest einer der Schwenkarme mit einem Teil der Schwenkeinrichtung einstückig ausgeführt. Insbesondere mag eine solche einstückige Ausbildung eines Schwenkarms an einer Schwenkeinrichtung oder zumindest Teilen dieser Schwenkeinrichtung als "Befestigung" an derselben angesehen werden. Anschaulich mag der getriebene Schwenkarm und die Schwenkeinrichtung in einem Teil gefertigt sein, das eine Halte- und Schwenkfunktion übernimmt. Der Teil der Schwenkeinrichtung mit dem der Schwenkarm einstückig oder einteilig ausgebildet sein mag, mag insbesondere ein Teil sein, welcher den Schwenkarm unmittelbar mit der zentralen Achse verbindet oder koppelt.

Gemäß einem beispielhaften Ausführungsbeispiel des Nachführsystems des zweiten Aspekts sind die Schwenkarme mittels Flanschverbindungen an der Schwenkeinrichtung befestigt. Insbesondere mögen die Schwenkarme mittels einer Schraubverbindung oder mittels anderer geeigneter Verbindungs- oder Befestigungsmethoden an den Flanschverbindungen der Schwenkeinrichtung befestigt sein.

Gemäß einem beispielhaften Ausführungsbeispiel des Nachführsystems des zweiten Aspekts sind die Flanschverbindungen drehbar gelagert. Insbesondere mögen die Flanschverbindungen um 180° schwenkbar sein. Beispielsweise mögen sie zwischen einem ersten Anschlagpunkt und einem zweiten Anschlagpunkt bewegbar sein. Der erste Anschlagpunkt mag durch einen Punkt definiert sein, bei welchen sich Solarkollektoren, von denen beispielsweise einer an einem der zwei Schwenkarme gekoppelt ist und von denen beispielsweise ein zweiter an dem zweiten Schwenkarm gekoppelt ist, berühren. Diese Berührstellung mag insbesondere während der Ruhestellung der Schwenkarme eingenommen werden und mag beispielsweise eine geschlossene Stellung darstellen, in welcher die Solarkollektoren oder zumindest Abschnitte oder Teile der Solarkollektoren von äußeren Einflüssen geschützt sind. Der zweite Anschlagpunkt mag durch einen Punkt definiert sein, an welchem spezielle Anschlagpuffer vorgesehen sind. Vorzugsweise sind die Flanschverbindungen voneinander unabhängig drehbar, d.h. die beiden Flanschverbindungen können um unterschiedliche Winkel zueinander gedreht werden.

Gemäß einem beispielhaften Ausführungsbeispiel des Nachführsystems des zweiten Aspekts weist das Nachführsystem eine Getriebeeinheit auf und ist als zweiachsiges Nachführsystem ausgebildet, wobei die Getriebeeinheit zwei weitere Drehachsen aufweist. Insbesondere mögen diese zwei weiteren Drehachsen Nachführachsen bilden, d.h. geeignet sein Solarkollektoren, welche an dem Nachführsystem befestigt sind, je nach Sonnenstand nachzuführen. Die zwei weiteren Drehachsen (Nachführachsen) mögen insbesondere von der Drehachse zu unterscheiden sein, welche dazu dient die Schwenkarme von der Arbeitsstellung in die Ruhestellung zu schwenken, wobei jedoch eine der weiteren Drehachsen mit dieser Drehachse zusammenfallen mag oder zumindest eine gleiche Ausrichtung aufweisen mag.

Gemäß einem beispielhaften Ausführungsbeispiel des Nachführsystems des zweiten Aspekts sind die zwei weiteren Drehachsen in einem Winkel zueinander angeordnet und derart eingerichtet, dass mittels ihnen die Solarkollektoren von einer ersten Arbeitsstellung in eine zweite Arbeitsstellung überführbar sind. Mit anderen Worten sind die zwei weiteren Drehachsen (Nachführachsen) nicht parallel zueinander ausgerichtet und es mag ein zweiachsiges Nachführsystem ausgebildet sein. Insbesondere mag die Getriebeeinheit einen Getriebekopf aufweisen und die Überführung von einer ersten in eine zweite Arbeitsstellung mag dazu dienen, die Schwenkeinrichtung der Getriebeeinheit, z.B. den Getriebekopf, in eine entsprechende Stellung zu bringen, sodass die Solarkollektoren nachgeführt werden, d.h. die Ausrichtung derselben dem Sonnenstand angepasst wird.

Gemäß einem beispielhaften Ausführungsbeispiel des Nachführsystems des zweiten Aspekts beträgt der Winkel zwischen den zwei weiteren Drehachsen 90°. Anders ausgedrückt sind die Nachführachsen im Winkel von 90° zueinander angeordnet. Die Tageshauptdrehung mag um eine Hauptachse, eine im Wesentlichen parallel zur Erdachse ausgerichtete Achse mit einer Verdrehmöglichkeit oder Verstellmöglichkeit von bis zu 360° erfolgen. Die dazu normal oder senkrecht gerichtete zweite Nachführachse, die Ekliptikachse, mag vorwiegend dazu dienen, die Solarkollektoren entsprechend der jahreszeitlichen Ekliptiklage in die ideale Nachführposition zu bringen. Hier genügt es eine Schwenkbewegung von max. +-25° zu ermöglichen.

Die Drehachse der drehbaren Flanschverbindungen am Getriebekopf bzw. an der Schwenkeinrichtung mag um 90° von einer der Hauptdrehachsen der Getriebeeinheit, insbesondere von der Ekliptikachse verschieden sein, d.h. mag im Wesentlichen senkrecht auf diese Achse stehen.

Gemäß einem beispielhaften Ausführungsbeispiel des Nachführsystems des zweiten Aspekts weist die Getriebeeinheit einem Getriebekopf auf, welcher mittels der zwei weiteren Drehachsen nachführbar ist, wobei eine Drehachse der drehbaren Flanschverbindungen fix am Getriebekopf verankert ist und normal, d.h. senkrecht, zu einer der weiteren Drehachsen ausgerichtet ist. Insbesondere mag die weitere Drehachse, zu der die Drehachse der drehbaren Flanschverbindung normal ausgerichtet ist, die Ekliptikachse sein.

Gemäß einem beispielhaften Ausführungsbeispiel des Nachführsystems des zweiten Aspekts weist die Getriebeeinheit einen Hauptantrieb auf, welcher derart eingerichtet ist, dass der Getriebekopf bzw. die Schwenkarme mittels ihm um eine erste der beiden Drehachsen, insbesondere die Hauptachse, der Drehvorrichtung drehbar bzw. schwenkbar sind.

Gemäß einem beispielhaften Ausführungsbeispiel des Nachführsystems des zweiten Aspekts weist die Getriebeeinheit einen Spindelantrieb auf, welcher derart eingerichtet ist, dass der Getriebekopf bzw. die Schwenkarme mittels ihm um eine zweite der beiden Drehachsen, insbesondere die Ekliptikachse, der Drehvorrichtung drehbar bzw. schwenkbar sind.

Allgemein betrachtet mag gemäß einem beispielhaften Ausführungsbeispiel des Nachführsystems ein Solarkollektorsystem geschaffen werden, welches Schwenkarme und eine Abstütz- oder Haltevorrichtung aufweist, wobei die Schwenkarme zueinander um eine gemeinsame Achse drehbar gelagert sind und wobei die Haltevorrichtung derart beweglich ist, dass diese bei geschlossener Kollektorposition in eine Halteposition zur Abstützung der Schwenkarme gebracht werden kann. Somit mag ein Solarkollektorsystem geschaffen sein, bei dem der Nachführaufwand verringert ist und eine kompakte Schutzstellung mit jeweils paarweise an den Spiegelenden verschlossenen Kollektoren erreichbar ist. Gemäß diesem beispielhaften Aspekt mögen die Spiegelenden im geschlossenen Zustand in einer vertikalen Halbebene unter der Schwenkachse liegen. Ein Schwenkarm (Führungsarm) ist mit einem Antrieb gekoppelt, - der andere Schwenkarm, (Schlepparm) ist um eine fix am Führungsarm befestigte Welle frei drehbar gelagert. Dieser kann anschlaggesteuert genau um 180° gedreht werden. Im geschlossen Zustand mag der Anschlag durch die Spiegelenden vorgegeben sein, - im offen Zustand mögen die Schwenkarme auf speziell vorgesehenen Anschlagvorrichtungen aufliegen. Vorzugsweise ist für das Schließen und Öffnen kein Antriebsmechanismus vorgesehen. Um zu verhindern, dass die Kollektoren aus dem geöffneten Zustand aufgrund von Windkräften oder einer ungünstigen Position der Schwerpunkte ungewollt zusammenklappen, mag eine Arretiervorrichtung vorgesehen werden. Diese mag mit einem Stellantrieb (z.B. Magnet) betätigt werden. Vorzugsweise funktioniert die Arretiervorrichtung aber auch rein schwerkraftgesteuert, damit ein Stromausfall zu keinem Sicherheitsrisiko führt. Die Haltevorrichtung ist vorzugsweise als Schwenkmechanismus ausgeführt, welcher über eine am Fundament stabil gelagerte Achse dreht. Die Haltevorrichtung mag gabelförmig mit zwei tellerförmigen Einfahrköpfen an den Enden ausgeführt sein. Sind die Kollektoren geschlossen, mögen die Einfahrköpfe in spezielle Aufnahmen an den Schwenkarmen einfahren. Optional mögen noch spezielle Arretiermechanismen vorgesehen werden. Für die Bewegung der Haltegabel mögen unterschiedlichste Stellantriebe, elektrisch betriebene Spindeltriebe, hydraulische oder pneumatisch betriebene Hubeinrichtungen, Kettentriebe... etc. eingesetzt werden. Die Haltegabel stützt die Kollektoren seitlich und in Richtung der Verbindungslinie von Gabellagerung und Einfahrkopf ab. Durch die seitliche Abstützung werden windlastbedingte Drehkräfte oder Drehmomente vom Nachführgetriebe ferngehalten.

Zusammenfassend ist zu bemerken, dass zwar das Reinigungssystem, bzw. das Solarkollektorsystem mit einem Reinigungssystem und das Haltesystem bzw. Nachführsystem für ein Solarkollektorsystem als zwei unterschiedliche Aspekte beschrieben wurden, diese jedoch selbstverständlich auch von dem Fachmann kombiniert werden können. So kann beispielsweise selbstverständlich ein Reinigungssystem, welches als ein Ausführungsbeispiel im Zusammenhang mit dem ersten Aspekt beschrieben wurde auch in einem Solarkollektor oder Solarkollektorsystem gemäß dem zweiten Aspekt verwirklicht werden. Umgekehrt kann ein Solarkollektorsystem gemäß dem ersten Aspekt selbstverständlich ein Haltesystem oder ein Nachführsystem gemäß irgendeinem der beispielhaften Ausführungsbeispiele des zweiten Aspekts aufweisen.

### Fiaurenkurzbeschreibuna

Weitere Merkmale und Einzelheiten der zwei Aspekte der Erfindung ergeben sich aus der nachfolgenden Figurenbeschreibung, wobei sich die Figuren 1 bis 8 auf den zweiten Aspekt beziehen und die Figuren 9 bis 12 auf den ersten Aspekt beziehen. Dabei zeigt:
Fig. 1 eine schematische Darstellung des bekannten Bewegungsablaufs über zwei parallel zueinander ausgerichtete Schwenkachsen.
Fig. 2 vier verschiedene Darstellungen eines Solarkollektorsystems gemäß einem ersten Ausführungsbeispiel, wobei das Solarkollektorsystem vier Solarkollektoren auf zwei Schwenkarmen aufweist.
Fig. 3 zwei verschiedene Darstellungen eines Solarkollektorsystems gemäß einem zweiten Ausführungsbeispiel, wobei das Solarkollektorsystem zehn Solarkollektoren auf zwei Schwenkarmen aufweist.
Fig. 4 eine Getriebeeinheit in zwei Ansichten, - einmal im offenen (oben) und einmal im geschlossenen Zustand.
Fig. 5 einen Getriebekopf bzw. die Schwenkeinrichtung für die Schwenkarme als Teil der Getriebeeinheit im Detail.
Fig. 6 eine Draufsicht und eine Untersicht eines Ausführungsbeispiels für eines Kollektorarms mit einer einteiligen Ausführung der Schwenkeinrichtung und der Schwenkarme.
Fig. 7 eine Detailansicht der Untersicht aus Fig. 6.
Fig. 8 eine Detailansicht der einteiligen Ausführung der Schwenkeinrichtung der Fig. 6
Fig. 9 eine schematische Darstellung eines Spiegelkollektorsystems in einem offenen Zustand und in einer Schutzstelllung.
Fig. 10 einen Blick auf zwei paarweise verschlossene Kollektoren.
Fig. 11 einen Reinigungszyklus mit ein- und ausgefahren Düsen und den Putzvorgang.
Fig. 12 einen möglichen Mechanismus zum Ausfahren der Düsen.

### Ausführliche Beschreibung der Figuren

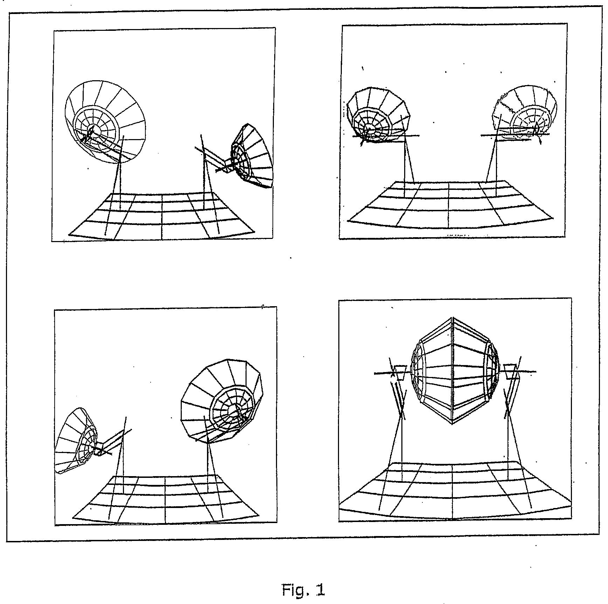

Nachfolgend wird mit Bezug auf die Figuren 1 bis 8 der zweite Aspekt, d.h. ein Haltesystem für ein Solarkollektorsystem, insbesondere ein Bewegungsapparat mit Halte- und Nachführfunktionen, näher erläutert.

Fig. 1 zeigt eine schematische Darstellung eines bekannten Bewegungsablaufs über zwei parallel zueinander ausgerichtete Schwenkachsen, wie er beispielsweise aus der WO2005/003644 bekannt ist. Im geschlossenen Zustand sind die Kollektoren nach oben gedreht und stützen sich gegenseitig an den Spiegelenden ab. Die getrennte Nachführung, die hohen Lasten an den Haltearmen und die nach oben gestellte Ruhelage führen zu einer aufwendigen konstruktiven Umsetzung.

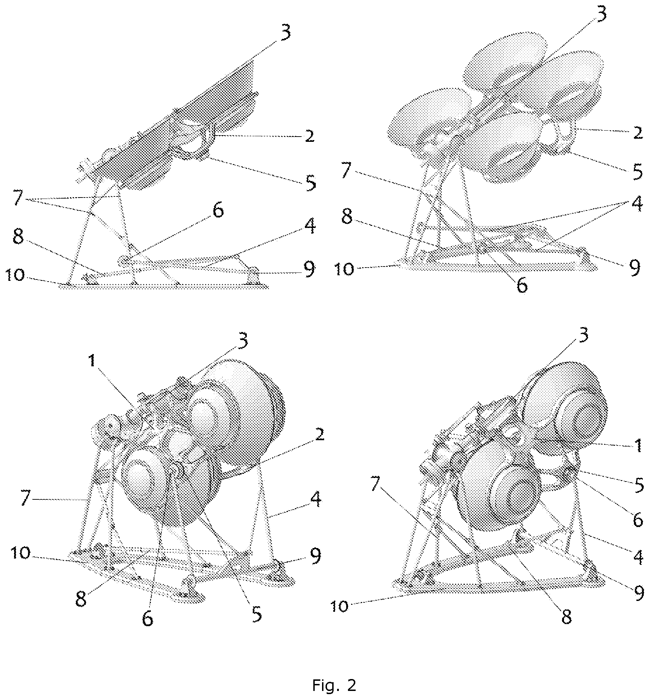

Fig. 2 zeigt vier verschiedene Darstellungen eines Solarkollektorsystems gemäß einem ersten Ausführungsbeispiel, wobei das Solarkollektorsystem vier Solarkollektoren auf zwei Schwenkarmen 1, 2 aufweist, wobei die Schwenkarme 1, 2, um eine gemeinsame zentrale Achse 3 angeordnet sind, um welche Sie in einen offenen bzw. einen geschlossenen Zustand verfahrbar sind. In den oberen beiden Darstellungen wird das Solarkollektorsystem in einem geöffneten Zustand oder einer Arbeitsstellung gezeigt, wobei die beiden Darstellungen Zwecks Verdeutlichung der Konstruktion aus zwei verschiedenen Perspektiven gezeigt sind. In den unteren beiden Darstellungen wird das Solarkollektorsystem in einem geschlossenen Zustand oder in einer Ruhestellung gezeigt, d.h. in einem Zustand, in welchem jeweils zwei Solarkollektoren gegeneinander zur Ruhe kommen. Ein wichtiger Aspekt, welcher in der Fig. 2 dargestellt ist, ist die Anordnung der beiden Schwenkarme 1, 2 um die zentrale Achse 3. Ferner weist das Solarkollektorsystem eine Haltevorrichtung 4 mit zwei Einfahrköpfen 6 auf, die im geschlossenen Zustand der Solarkollektoren in Aufnahmen 5, welche an den Schwenkarmen ausgebildet sind, eingefahren werden können. Mit einer Abstützung über einen Steher 7 und zweier Abstützungen an den Einfahrköpfen 6 der Haltevorrichtung 4 ist eine stabile Dreipunktauflage über einem Fundament 10 des Solarkollektorsystems gegeben. Beim Eingriff der Einfahrköpfe 6 können die Solarkollektoren aneinander gepresst werden, wobei eine verbesserte Abdichtung ermöglicht werden mag, und gegen seitlich auftretende Windkräfte optimal abgestützt werden. Die Haltevorrichtung 4 wird über einen elektrisch betriebenen Spindeltrieb 8 um eine Drehachse 9 am Fundament 10 angetrieben.

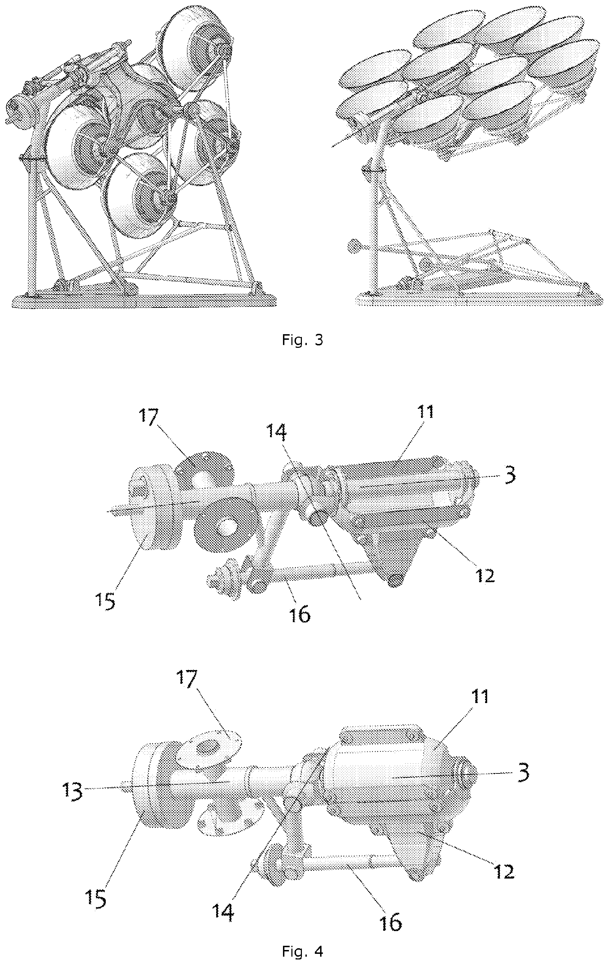

Fig. 3 zeigt zwei Darstellungen eines Solarkollektorsystems gemäß einem zweiten Aspekt im offenen und geschlossenen Zustand. Das Solarkollektorsystem der Fig. 3 unterscheidet sich von dem in Fig. 2 dargestellten insbesondere dadurch, dass es zehn Solarkollektoren aufweist, welche an zwei Schwenkarmen 1, 2 angebracht sind. Es ist jedoch anzumerken, dass ein Solarkollektorsystem jede geeignete Zahl von Solarkollektoren aufweisen kann. Insbesondere mag ein Solarkollektorsystem jede gerade Anzahl von Solarkollektoren aufweisen, so dass Paare von Solarkollektoren gebildet werden können, welche sich in einer Ruhestellung berühren oder abstützen. Abgesehen von den Dimensionen und den spezifischen Ausführungen der einzelnen Bauteile, welche an die geänderte Anzahl von Solarkollektoren angepasst werden, ist das Funktionsprinzip des Solarkollektorsystems der Fig. 3 gleich dem des Solarkollektorsystems der Fig. 2. Da die einzelnen Komponenten oder Bauteile, die in der Fig. 3 dargestellt sind, die gleichen Funktionen übernehmen, wie die in Fig. 2 dargestellten, wird das Funktionsprinzip nicht näher beschrieben und die Bezugszeichen in der Fig. 3 der besseren Übersichtlichkeit weggelassen. Noch deutlicher als in Fig.2 ist in der Fig. 3 zu ersehen, dass bei geöffneten Solarkollektoren das gewichtsbedinge Drehmoment auf die Hauptdrehachse 13 relativ gering wird, da deren Schwerpunkt nahe an der Drehachse zu liegen kommt.

Fig. 4 zeigt eine Getriebeeinheit in zwei Ansichten, - einmal im offenen (oben) und einmal im geschlossenen Zustand (unten), d.h. im Arbeitszustand bzw. Ruhezustand, für das in Fig. 2 dargestellte Vierergestell als Komplettmodul. Eine solche Getriebeeinheit oder ein solches Modul mag als Assemblingeinheit fertig vormontiert bereitgestellt werden und nachfolgend in einem Solarkollektorsystem bei dessen Installation eingebaut werden. Die Getriebeeinheit erfüllt die Funktionen einer zweiachsigen Nachführung der Solarkollektoren über die Achsen 13 und 14, sowie die Funktion der Schwenkbewegung der Schwenk- oder Haltearme zum Öffnen und Schließen der Solarkollektoren über die Achse 3, welche schwenkbar um die Achse 14 gelagert ist. Gegebenenfalls können gewünschte elektrische und hydraulische Leitungen sowie gewünschte Antriebe bereits in die Getriebeeinheit integriert sein. Beispielsweise mag ein Hauptgetriebe 15 zur Drehung um die Achse 13 und/oder ein Spindeltrieb 16 für die Drehung um die Achse 14 bereits im vorgefertigten Modul vorgesehen sein, so dass eine spätere Installation des Solarkollektorsystems vereinfacht werden mag. Die Getriebeeinheit mag beim Zusammenbau oder bei der Installation im Feld starr am Steher 7 montiert werden. Die Anstellung der Hauptachse 13, d.h. die Winkelstellung der Hauptachse 13 bezüglich eines Fundaments des Solarkollektorsystems, mag mittels eines passenden Setzens von Bohrungen an den Hauptflanschen 17 genau vorgegeben werden. Die Hauptflansche 17 werden an fix zum Fundament verankerten Gegenflanschen des Stehers 7 montiert. Der Steher 7 mag als Fachwerkskonstruktion entsprechend den Bildern in Fig. 2 und Fig. 3 ausgeführt sein, - als massive Kragarmkonstruktion, oder als offene Schalenkonstruktion. Am Getriebekopf sind zwei Drehflansche 11, 12 vorgesehen, an welche die beiden Schwenkarme mit den Kollektoraufnahmen und den Halteaufnahmen 5 verschraubt werden.

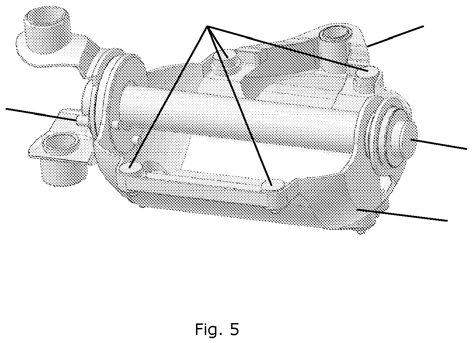

Fig. 5 zeigt den Getriebekopf bzw. die Schwenkeinrichtung für die Schwenkarme als Teil der Getriebeeinheit aus Fig. 4 im Detail. Die Drehflansche 11, 12 sind über die Drehachse 3 drehbar gelagert. Der Getriebekopf weist zwei Anschlagpuffer 18 auf, welche eine 180° Drehung der Schwenkarme 1, 2 aus dem geschlossenen Zustand bzw. der Ruhestellung der Schwenkarme zulassen, sodass alle Solarkollektorpaare im geöffneten Zustand in die gleiche Richtung zeigen. Über eine Arretiervorrichtung 19 können die Dreh- oder Halteflansche 11, 12 starr zusammengekuppelt werden, wodurch ein ungewolltes Zusammenklappen der Schwenkarme und damit der daran befestigten Solarkollektoren verhindert werden kann.

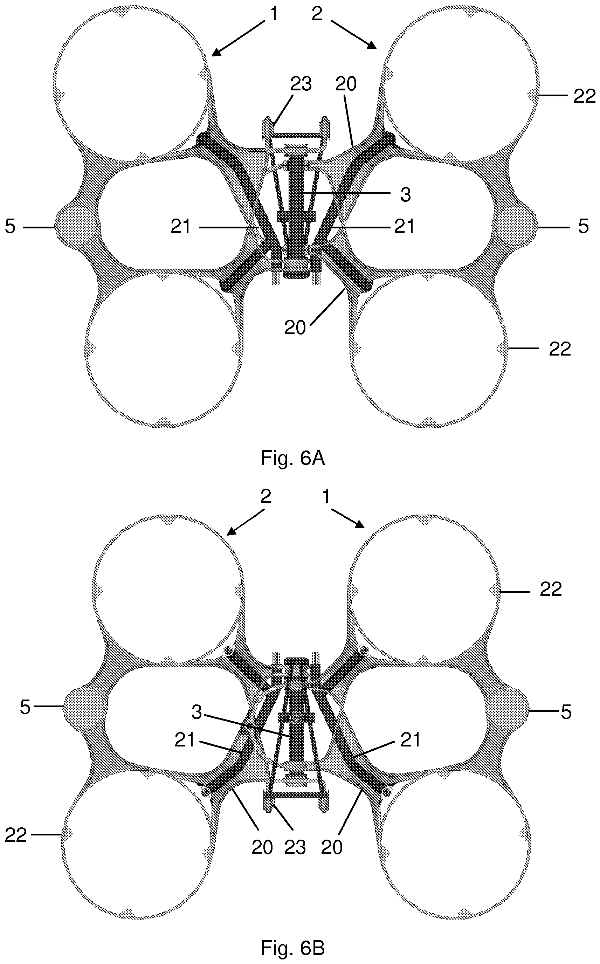

Fig. 6 zeigt eine Draufsicht und eine Untersicht eines Ausführungsbeispiels für einen Kollektorarm mit einer einteiligen Ausführung der Schwenkeinrichtung und der Schwenkarme. Insbesondere zeigt Fig. 6A eine Draufsicht auf zwei Schwenkarme 1 und 2, welche direkt an einer zentralen Achse 3 dreh- oder schwenkbar befestigt sind. Direkt heißt im diesem Zusammenhang, dass die Schwenkarme und die Schwenkeinrichtung in einem Teil gefertigt sind, d.h. es sind keine Flansche notwendig, wie sie beispielsweise bei der Getriebeeinheit der Fig. 4 und 5 als Bezugszeichen 11 und 12 dargestellt werden. Die Schwenkarme mögen hierbei flächig ausgebildet sein, wobei sie Versteifungen 20 und Tragarme 21 aufweisen mögen, welche zur Kraft- bzw. Momentenübertragung ausgebildet sein mögen. Ferner sind in Fig. 6 noch schematisch die Bereiche 22 gezeigt, in welchen Solarkollektoren ausgebildet werden können. Zusätzlich sind noch Ösen 23 dargestellt, welche zur Aufnahme der in Fig. 4 mit dem Bezugszeichen 14 versehenen Ekliptikachse oder Welle ausgebildet sind.

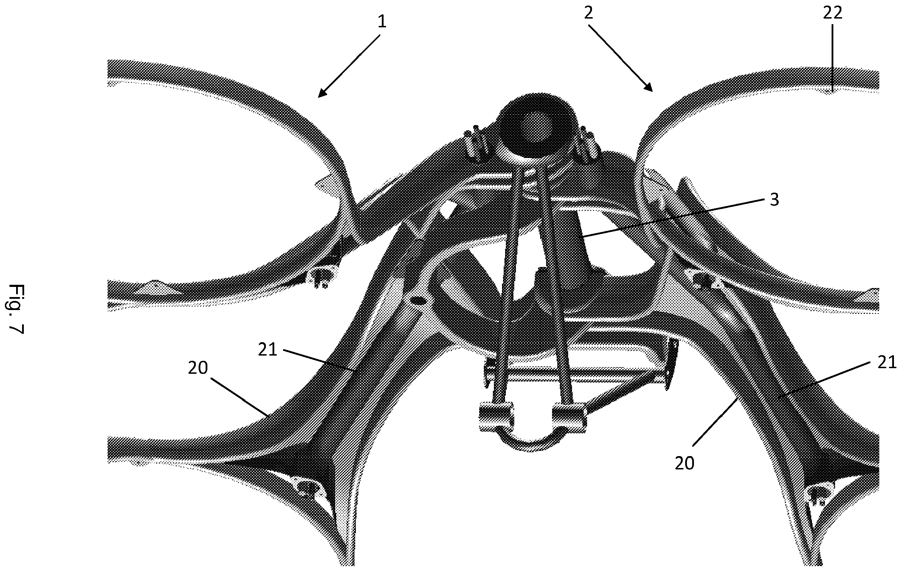

Fig. 7 eine Detailansicht der Untersicht aus Fig. 6, bei welcher die wesentlichen Elemente oder Komponenten der Schwenkarme 1 und 2 ersichtlich sind. Auch hier ist wiederum zu erkennen, dass diese einteilig mit der Schwenkeinrichtung ausgebildet sind, d.h. keine Flasche zur Befestigung der Schwenkarme an der Schwenkvorrichtung benötigt werden.

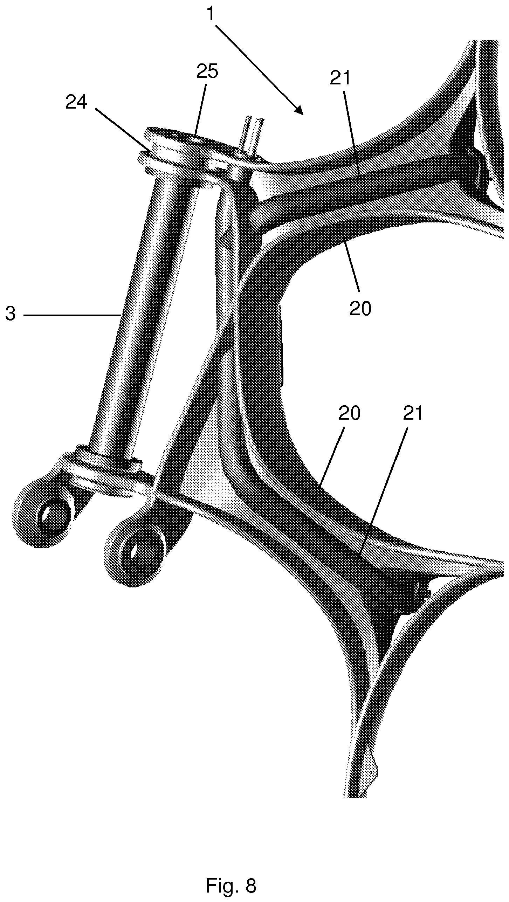

Fig. 8 eine Detailansicht der einteiligen Ausführung der Schwenkeinrichtung der Fig. 6, wobei zur verbesserten Übersichtlichkeit nur noch ein Schwenkarm 1 dargestellt ist. Der zweite Schwenkarm 2 kann im Wesentlichen spiegelbildlich zum dargestellten Schwenkarm 1 ausgeführt werden und zusammen mit diesem um eine zentrale Achse 3 drehbar gelagert werden. Hierzu weist der Schwenkarm 1 Führungsnuten 24 auf, in welcher der zweite Schwenkarm eingreifen kann, so dass unabhängig vom ersten Schwenkarm 1 drehbar um die zentrale Achse 3 gelagert ist. Alternativ mag er auch zusätzliche Ösen aufweisen. Diese mögen parallel zu der in Fig. 8 dargestellten Öffnung 25 angeordnet werden, durch welche dann eine zentrale Achse oder Welle geführt werden kann, welche es dann ermöglicht die Solarkollektoren von der Ruhestellung in die Arbeitsstellung zu verbringen. Ferner, werden wie im Zusammenhang mit der Fig. 6 bereits erläutert, die Ösen 23 verwendet, um den Schwenkarm um eine Ekliptikachse drehbar zu lagern.

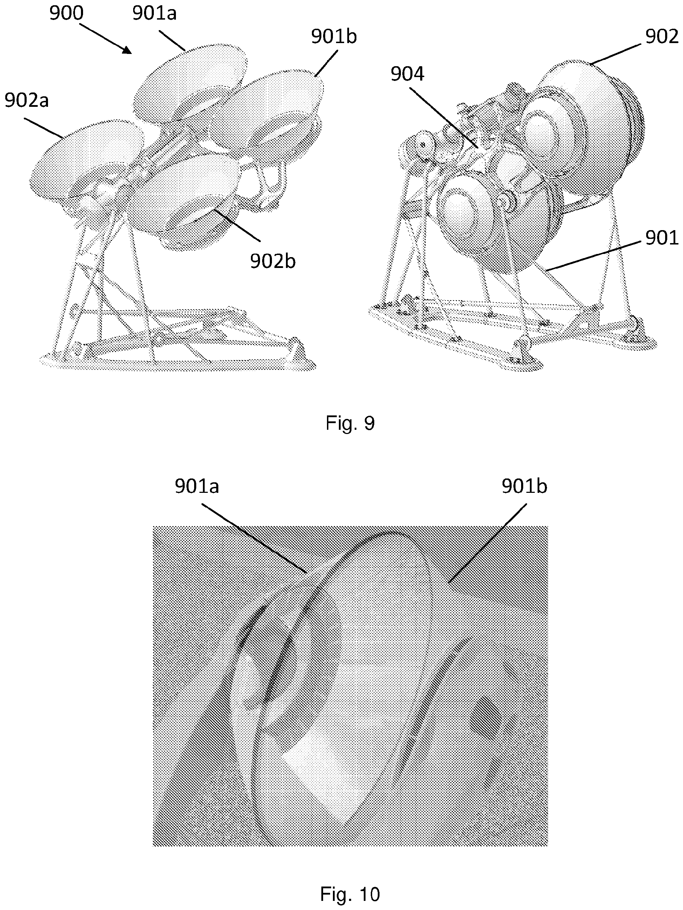

Nachfolgend wird mit Bezug auf die Figuren 9 bis 12 der erste Aspekt, d.h. ein Reinigungssystem für ein Solarkollektorsystem bzw. ein Solarkollektorsystem mit einem Reinigungssystem näher erläutert.

Fig. 9 zeigt eine schematische Darstellung eines Spiegelkollektorsystems 900 in einem offenen Zustand und in einer Schutzstelllung. Über eine Haltevorrichtung 901 werden die Kollektoren stabil in der Lage fixiert und aneinander gepresst. Dies bewirkt eine gute Abdichtung an den Spiegelenden, wo idealer Weise Gummidichtungen 902 angebracht sind.

Insbesondere zeigt die Fig. 9 ein Spiegelkollektorsystem 900 mit zwei Paaren von Einzelkollektoren 901a, 901b, 902a und 902b, welche beweglich an einem Gestell 903 gelagert sind. Hierzu weist das Spiegelkollektorsystem zwei Schwenkarme 904 auf, wobei ein erster Kollektor eines jeden Kollektorpaares an einem ersten Schwenkarm befestigt ist, während der zweite Kollektor jedes Kollektorpaares an den zweiten Schwenkarm befestigt ist. Die Schwenkarme sind so um eine gemeinsame Achse oder Welle schwenkbar, dass die Kollektoren von dem offenen Zustand in die Schutzstellung bringbar oder überführbar sind. Die Gummidichtungen 902 sind vorzugsweise an dem Spiegelende von zumindest einem Einzelkollektor jedes Kollektorpaares angeordnet und mögen einer guten Abdichtung des Kollektorpaares im geschlossenen Zustand oder der Schutzstellung des Spiegelkollektorsystems dienen.

Fig. 10 zeigt einen Blick auf zwei paarweise verschlossene Kollektoren 901a und 901b mit einer Überblendung in den Innenraum, d.h. der Innenraum, den jedes Paar von Kollektoren in der Schutzstellung bildet, wird in der Fig. 10 ebenfalls gezeigt, so dass ein Innenbereich des Einzelkollektors trotz geschlossenen Zustands sichtbar ist. Der Innenraum ist nach außen abgedichtet. Dies ist die ideale Position für den gesamten Reinigungsvorgang bzw. für einen speziellen Programmabschnitt des Reinigungsvorgangs.

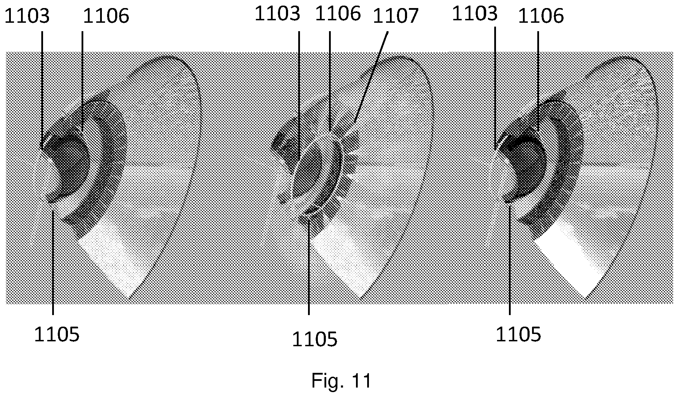

Fig. 11 zeigt einen Reinigungszyklus mit ein- und ausgefahren Düsen und den Reinigungsvorgang. Zur Veranschaulichung wird der Vorgang beim offenen Kollektor gezeigt. Für die Reinigung wird eine ringförmige Düsenanordnung in eine günstige Position ausgefahren. Die Düsen können schon beim Ausfahrvorgang geöffnet werden. Idealer Weise funktioniert das System rein über den Systemdruck. Über Stellventile wird der Putzvorgang automatisch gesteuert. Vorrichtungen zur Heißwassererzeugung und/oder Dampferzeugung können über Solarenergie gespeist werden.

Insbesondere stellt die Fig. 11 Teile eines Reinigungszyklus dar. Die ringförmige Düsenanordnung 1105, welche beispielsweise mittels eines Leitungsringes oder Verteilerringes 1103 mit daran befindlichen Düsen 1106 ausgebildet sein mag, befindet sich in Fig. 11A in einem eingefahrenen Zustand, in welchem sie eine möglichst geringe Einschränkung der Stromerzeugung und/oder Wärmeerzeugung darstellen bzw. verursachen. Der eingefahrene Zustand entspricht somit im Wesentlichen dem Betriebszustand, d.h. der Energieumwandlung, des Kollektorsystems. In Fig. 11B ist der Kollektor der Fig. 11A während eines Reinigungsvorganges gezeigt, welches schematisch durch Sprühnebel 1107, welche aus den Düsen austreten, dargestellt wird. Während des Reinigungsvorganges befindet sich die ringförmige Düsenanordnung 1105 in einer für die Reinigung günstigen Position, d.h. der Ring mag bezüglich der Position in Fig. 11A verfahren oder ausgefahren sein, so dass der Spiegel des Kollektors effektiv gereinigt werden kann. In Fig. 11C wird die Düsenanordnung wieder in ihrem Ruhezustand oder eingefahrenen Zustand gezeigt. Die Überführung der Düsenanordnung vom Ruhezustand zum Reinigungszustand bzw. umgekehrt mag vorzugsweise alleine mittels des Systemdrucks, d.h. dem Druck des Reinigungsmediums, welches zu dem Leitungsring 1103 und den Düsen 1106 geleitet wird, geschehen. Alternativ mögen auch zusätzliche Aktuatoren verwendet werden, welche eine Verfahrung der Düsenanordnung durchführen oder zumindest unterstützen. Das Solarkollektorsystem mag eine Steuereinheit aufweisen, welche den Ablauf des Reinigungsvorganges steuert bzw. regelt. Insbesondere mag diese Steuereinheit die Stellventile und/oder das Ein- bzw. Ausfahren der Düsenanordnung steuern. Die Steuereinheit mag eine automatische Steuerung beinhalten oder mag manuelle Eingaben eines Benutzers oder Bedieners berücksichtigen oder benötigen. Hierzu mag die Steuereinheit eine Recheneinheit beispielsweise einen Prozessor aufweisen.

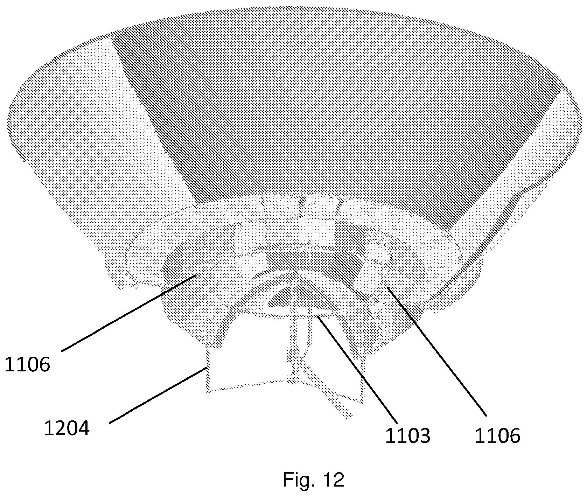

Fig. 12 zeigt einen möglichen Mechanismus zum Ausfahren der Düsen 1106. Die Düsen sind auf einem Verteilerring 1103 aufgebracht, der über drei Führungen 1204 ausgefahren werden kann, d.h. der Verteilerring kann zwischen einer Ruheposition des Reinigungssystems, in welcher der Betrieb des Solarkollektors nicht oder nur wenig gestört wird, und einer Reinigungsposition oder Aktivposition, in welcher eine Reinigung durchgeführt wird, verfahren werden. Prinzipiell können hierfür alle möglichen geeigneten Mechanismen verwendet werden.

Es sind somit mehrere Ausführungsformen und Aspekte der vorliegenden Erfindung beschrieben worden. Obgleich die vorliegende Erfindung anhand konkreter Ausführungsformen beschrieben wurde, versteht es sich, dass die vorliegende Erfindung nicht so ausgelegt werden darf, als werde sie durch diese Ausführungsformen eingeschränkt. Insbesondere ist auch zu bemerken, dass selbstverständlich auch die beiden getrennt beschriebenen Aspekte kombiniert werden können. So kann beispielsweise selbstverständlich ein Reinigungssystem, welches im Zusammenhang mit dem ersten Aspekt beschrieben wurde auch in einem Solarkollektor oder Solarkollektorsystem gemäß dem zweiten Aspekt verwirklicht werden. Umgekehrt kann ein Solarkollektorsystem gemäß dem ersten Aspekt selbstverständlich ein Haltesystem oder ein Nachführsystem gemäß irgendeinem der beispielhaften Ausführungsbeispiele des zweiten Aspekts aufweisen. Ergänzend wird darauf hingewiesen, dass "aufweisen" keine anderen Elemente oder Schritte ausschließt und "eine" oder "ein" keine Mehrzahl ausschließt. Ferner sei darauf hingewiesen, dass Merkmale oder Schritte, die mit Verweis auf eines der obigen Ausführungsbeispiele bzw. Ausführungsformen beschrieben worden sind, auch in Kombination mit anderen Merkmalen oder anderer oben beschriebener Ausführungsbeispiele verwendet werden können. Bezugszeichen in den Ansprüchen sind nicht als Einschränkung anzusehen.

## Patentansprüche

1. Solarkollektorsystem, welches eine Mehrzahl von spiegelkonzentrierenden Kollektoren (901a, 901b, 902a, 902b) und ein Reinigungssystem mit Putzdüsen (1106) aufweist, welches an den Kollektoren angebracht ist, wobei die Putzdüsen derart eingerichtet sind, dass mittels ihnen ein Reinigungsmedium oder Fluid zu den Kollektoren leitbar ist, und wobei das Solarkollektorsystem derart eingerichtet ist, dass die Kollektoren während eines Putzvorgangs eine geschlossene Schutzstellung einnehmen, die durch paarweises Zusammenschließen der Kollektoren an Spiegelenden der Kollektoren erfolgt und bei welcher ein Innenraum zwischen den Kollektoren abgedichtet ist, wobei mittels der Putzdüsen in der Schutzstellung ein Reinigungsmedium oder Fluid in den Innenraum der paarweise verschlossenen Kollektoren eingebracht werden kann.

2. Solarkollektorsystem nach Anspruch 1, wobei die Putzdüsen beweglich gelagert sind.

3. Solarkollektorsystem nach einem der Ansprüche 1 bis 2, welches ferner einen Verteilerring (1103) aufweist, auf welchem die Putzdüsen angeordnet sind und welcher über Führungen (1204) ausfahrbar ist.

4. Solarkollektorsystem nach Anspruch 1, welches Gummidichtungen (902) aufweist, die an den Spiegelenden angebracht sind.

5. Solarkollektorsystem nach einem der Ansprüche 1 bis 4, welches eine Haltevorrichtung (901) aufweist, welche derart eingerichtet ist, dass die Kollektoren in der Schutzstellung mittels der Haltevorrichtung stabil positioniert werden und aneinander gepresst werden.

## Claims

1. A solar collector system, which comprises a plurality of mirror concentrating collectors (901a, 901b, 902a, 902b) and a cleaning system with cleaning nozzles (1106), which is attached to the collectors, wherein the cleaning nozzles are configured in such a way that, by using them, a cleaning medium or fluid is guidable to the collectors, and
wherein the solar collector system is configured in such a way that the collectors assume a closed protective position during a cleaning process which takes place by closing the collectors in pairs at the mirror ends of the collectors and at which an interior space between the collectors is sealed, wherein in the protective position a cleaning medium or fluid is insertable in the interior space of the in pairs closed collectors by the cleaning nozzles.

2. The solar collector system according to claim 1, wherein the cleaning nozzles are movably mounted.

3. The solar collector system according to one of claims 1 to 2, which further comprises a distributing ring (1103), on which the cleaning nozzles are arranged, and which is extendable by way of guides (1204).

4. The solar collector system according to claim 1, which comprises rubber sealings (902) arranged at the mirror ends.

5. The solar collector system according to claim 1 to 4, which comprises a retaining device (901) configured in such a way that the collectors are stably positioned in the protective position and pressed against each other by the retaining device.

## Revendications

1. Système collecteur solaire qui présente une pluralité de collecteurs (901a, 901b, 902a, 902b) à concentration de miroirs et un système de nettoyage avec des buses de nettoyage (1106) qui est monté au niveau des collecteurs, **caractérisé en ce que** les buses de nettoyage sont aménagées de telle manière qu'un agent de nettoyage ou fluide puisse être guidé jusqu'aux collecteurs au moyen de celles-ci, **en ce que** le système collecteur solaire est aménagé de telle manière que les collecteurs occupent une position de protection fermée pendant un processus de nettoyage, laquelle s'opère par un regroupement par paire des collecteurs au niveau d'extrémités de miroir des collecteurs et dans laquelle un espace intérieur est rendu étanche entre les collecteurs, et **en ce qu'**un agent de nettoyage ou fluide peut être introduit dans l'espace intérieur des collecteurs fermés par paire au moyen des buses de nettoyage dans la position de protection.

2. Système collecteur solaire selon la revendication 1, **caractérisé en ce que** les buses de nettoyage sont logées de manière mobile.

3. Système collecteur solaire selon l'une quelconque des revendications 1 à 2, qui présente en outre un anneau de distribution (1103), sur lequel les buses de nettoyage sont agencées et qui peut être sorti par des guidages (1204).

4. Système collecteur solaire selon la revendication 1, qui présente des garnitures en caoutchouc (902) qui sont montées au niveau des extrémités de miroir.

5. Système collecteur solaire selon l'une quelconque des revendications 1 à 4, qui présente un dispositif de support (901) qui est aménagé de telle manière que les collecteurs soient positionnés de manière stable dans la position de protection au moyen du dispositif de support et soient pressés les uns contre les autres.
